# EUROPEAN PATENT APPLICATION

(11) **EP 2 202 325 A1**
(43) Date of publication of application: **30.06.2010**
(21) Application number: 08791370.3
(22) Date of filing: 14.07.2008
(51) Int. Cl.: C21B 11/02

(54) **METHOD OF OPERATING VERTICAL FURNACE**

(30) Priority: 06.09.2007 JP 2007231720; 07.07.2008 JP 2008176968
(71) Applicant: Nippon Steel Corporation, Chiyoda-ku Tokyo 100-8071 (JP); Kuettner Gmbh & Co. Kg, Essen 45128 (DE)
(72) Inventor: SHINOTAKE, Akihiko, Tokyo 100-8071 (JP); OMATSU, Yasuhiko, Tokyo 100-8071 (JP); NAITO, Masaaki, Tokyo 100-8071 (JP); AKAGI, Kazushi, Tokyo 100-8071 (JP); TSUBOTA, Jun, Tokyo 100-8071 (JP); KIKUCHI, Zen-etsu, Tokyo 100-8071 (JP); MURASE, Shin, Tokyo 100-8071 (JP); LACHNER, Hans Jaan, Essen 45128 (DE); LEMPERLE, Michel, Essen 45128 (DE)
(74) Representative: Vossius & Partner
(86) International application number: PCT/JP2008/063078
(87) International publication number: WO 2009/031369

(57) **Abstract**

A method of operating a shaft furnace charging an iron source containing sheet scrap iron in 50 mass% to 90 mass% and coke in alternating layers over a coke bed filled inside a furnace lower portion from the furnace top and blowing air from tuyeres at the lower portion of the furnace to melt the iron source, comprising (a) dividing the sheet scrap iron of each charge in a raw material charging bucket into two so that the ratio of the sheet scrap iron after division to the total amount of the iron source becomes no more than 50 mass% in each portion, (b) inserting between the divided portions of sheet scrap iron at least one material of plate scrap iron, an iron source other than scrap iron, or coke, then (c) charging the furnace interior via the raw material charging bucket with the divided sheet scrap iron and any of the plate scrap iron, iron source other than scrap iron, or coke in alternating layers.

## Description

### TECHNICAL FIELD

The present invention relates to a method of operating a shaft furnace comprising charging alternating layers of an iron source and coke from the top of the furnace over a coke bed filled inside the lower portion of the furnace and blowing hot air or cold air from tuyeres at the lower portion of the furnace to melt the iron source, more particularly relates to a method of operating a shaft furnace using an iron source containing a large amount of sheet scrap iron.

### BACKGROUND ART

The blast furnace method is the mainstream method of producing pig iron using iron ore as an iron source. On the other hand, the cupola method and the like are known as methods that produce pig iron by melting mainly scrap iron, foundry scrap, pig iron, and other iron sources having a high metallization rate in comparison to iron ore with a shaft furnace having a small inner volume compared to a normal blast furnace.

Such a type of shaft furnace uses iron sources that do not require reduction, so there is little need like in the blast furnace method to blow 1000°C or higher hot air from tuyeres, form a raceway space inside the furnace, produce' a reducing gas (CO), and use this high temperature reducing gas to indirectly reduce the iron ore.

Therefore, the operation of a cupola or other shaft furnace not requiring reduction consists of blowing oxygen-enriched cold air or hot air of no more than 600°C from the tuyeres into the furnace, using combustion with the coke to secure the heat source necessary for heating the raw material and fuel for melting, and mainly melting the iron source.

In the operation of a cupola or other shaft furnace not requiring normal reduction, in order to suppress a drop in the melting heat resulting from the endothermic reaction (solution loss reaction) between the post-coke combustion CO₂ gas and coke, the practice has been to use large-size foundry coke with a size of about 100 to 150 mm or larger than blast furnace coke (size of about 40 to 50 mm).

However, large-size foundry coke is expensive compared with small-size coke such as blast furnace coke, so use of small-size coke particles has been experimented with in recent years to cut fuel costs.

Further, in recent years, there has been proposed a method of operating a shaft furnace that uses not only scrap iron, casting scrap, pig iron, and iron sources not requiring reduction which have been used with the cupola method etc., but also iron sources with metallization rates lower than these and requiring reduction such as dust agglomerates and self-reducing nodules (agglomerates with high carbon material content) and melts the iron sources and partially reduces it to produce pig iron.

For example, "Goksel et al., Transactions of the American Foundrymen's Society, Vol. 85, AFS Des Plaines, Ill. (1977), p. 327-332" reports operation of a shaft furnace requiring a reduction function by blowing into the furnace hot air of no more than 600°C or comparatively low in blast temperature and using carbon-containing pellets in 5% weight without forming a raceway at the tip of the tuyeres like in the blast furnace method.

Japanese Patent Publication (A) No. 01-501401 proposes a method of using a smelting furnace comprising a blast furnace having secondary tuyeres and a hearth crucible having primary tuyeres and having a diameter larger than the blast furnace and charging only scrap iron and self-reducing nodules from the blast furnace top over a fuel bed comprised of small-size coke positioned at the part connecting the blast furnace and hearth crucible.

According to this method, at the hearth part, the self-reducing nodules directly react with the small-size coke of the fuel bed. The endothermic reaction lowers the melting heat, however, it is possible to obtain generated heat at the secondary tuyeres of the blast furnace part by a CO combustion reaction, so heat for melting the scrap iron is obtained with a high combustion efficiency η_{co} (=CO₂/(CO+CO₂)).

However, with this method, there are the problems that the permeability drops due to melting and reduction of the self-reducing nodules at the hearth part, the amount of bed coke consumed increases due to carburization to the molten pig, etc. Further, only iron sources are charged from the blast furnace, so scrap iron with a high metallization rate is rapidly melted by the heat of combustion of CO from the secondary tuyeres. When cooling, this contacts the walls of the blast furnace part and forms scaffolding. This is liable to become a factor causing operating trouble due to the charged raw material hanging on it.

Further, Japanese Patent Publication (A) No. 10-036906 proposes an operating method comprising charging dust agglomerates, self-reducing nodules, or other iron sources that require reduction, scrap iron, pig iron, or other iron sources that can simply be melted, and small-size coke over a coke bed filled in the lower portion of the furnace from the top of a shaft furnace and blowing oxygen-containing gas of ordinary temperature or 600° or lower from two rows of tuyeres arranged in the height direction of the furnace walls to reduce and melt the materials, the operating method determining an η_{co} (gas utilization rate) optimal for reduction and melting based on the average metallization rate of the iron sources and controlling the exhaust gas η_{co} to within an optimal range by adjusting the charged height in the furnace.

The above operating method proposes an operating method that charges the furnace center with a mix of high metallization rate iron sources not requiring reduction and coke of a comparatively large-size, mixes low metallization rate iron sources requiring reduction with small-size coke and charging the mix at the furnace periphery, and adjusts the height of the coke bed at the furnace lower portion and/or charged height in the furnace so as to control the η_{co} (gas utilization rate) of the exhaust gas to the range of η_{co} optical for reduction and melting.

Further, Japanese Patent Publication (A) No. 09-203584 also proposes a method of charging a shaft furnace with self-reducing nodules, dust agglomerates, scrap iron, and other iron sources, small-size coke, and other raw materials and fuel during which defining two or more charges of raw material and fuel as one cycle and, at each cycle, charging the furnace center with a mix of scrap iron and other iron sources not requiring reduction etc. and large-size coke (size of 60 mm or more), charging the furnace periphery with a mix of self-reducing nodules, dust agglomerates, or other iron sources requiring reduction and small-size coke (size of no more than 60 mm), and making the iron source/coke weight ratio at the furnace center larger in comparison to the furnace periphery.

According to the methods of Japanese Patent Publication (A) No. 10-036906 and Japanese Patent Publication (A) No. 09-203584, the scrap iron and other high metallization rate iron sources and the self-reducing nodules and other low metallization rate iron sources are charged mixed with sizes of coke suitable for different zones in the furnace radial direction, so in particular when high metallization rate scrap iron and the like rapidly melt due to the combustion heat of C0 from the secondary tuyeres and cool, they can be kept from contacting the walls of the blast furnace part and forming scaffolding and therefore operating trouble due to hanging of charged raw material can be prevented.

However, in the above operating methods, a special charging apparatus for charging mixed with sizes of coke suitable for different zones in the furnace radial direction becomes necessary. Further, there are many control factors at the time of charging. This becomes a cause of lowered productivity. Therefore, these methods have the defect that they are not suitable for operation aimed at high production.

### DISCLOSURE OF THE INVENTION

Generally, scrap iron of sheets generated in large amounts during the process of manufacturing cans, home electronics, automobiles, and the like and scrap iron obtained by cutting up recovered materials of these are also called "shredder scrap". They are mostly thin and relatively low in carbon, therefore have the property of a high melting point.

According to studies of the inventors, this sheet scrap iron has a lighter weight, lower heat capacity, and higher melting point in comparison to plate scrap iron and large bulk size pig iron and other large scrap having similarly high metallization rates, so when melting iron sources having a high mixture rate of sheet scrap iron by a cupola or other shaft furnace, sometimes the sheet scrap iron backs up at a high position in the furnace height direction, rapidly starts to melt, and cools and solidifies. In such a case, base metal scaffolding is liable to form and grow on the furnace walls.

The base metal scaffolding once formed on the furnace walls at a high position, due also to the high melting point composition, is difficult to remelt, interferes with the descent speed of other charging raw materials descending from above, and becomes a cause of hanging. This is liable to lead to a rise in the furnace top gas temperature and other operation instability.

In conventional cupola and other shaft furnace operation, when using such sheet scrap iron (thin pieces of shredder scrap) as an iron source for melting, it had been necessary to limit the mixture ratio of the sheet scrap iron.

The present invention, based on the current state of these prior art, provides a method of operating a shaft furnace capable of suppressing, without dropping the production speed, the formation of base metal scaffolding on the furnace walls when melting an iron source having a high amount of sheet scrap iron (thin pieces of shredder scrap), preventing hanging of the charged raw material, rising of the pressure loss inside the furnace, deterioration of permeability, etc., and carrying out operation efficiently and stably over a long period.

The present invention solves the above problems and has as its gist the following.
(1) A method of operating a shaft furnace charging an iron source containing sheet scrap iron in no less than 50 mass% and coke in alternating layers over a coke bed filled inside a furnace lower portion from the furnace top and blowing air from tuyeres at the lower portion of the furnace to melt the iron source, said method of operating a shaft furnace comprising
   (a) dividing the sheet scrap iron of each charge in a raw material charging bucket into two so that the ratio of the sheet scrap iron after division to the total amount of the iron source becomes no more than 50 mass% in each portion,
   (b) inserting between the divided portions of sheet scrap iron at least one material of plate scrap iron, an iron source other than scrap iron, or coke, then
   (c) charging the furnace interior via the raw material charging bucket with the divided sheet scrap iron and any of the plate scrap iron, iron source other than scrap iron, or coke in alternating layers.
(2) A method of operating a shaft furnace as set forth in (1), wherein the sheet scrap iron has a maximum thickness of no more than 10 mm and a maximum length of no more than 150 mm.
(3) A method of operating a shaft furnace as set forth in (1) or (2), wherein the sheet scrap iron has a C content of no more than 0.5 mass%.

According to the present invention, when melting an iron source containing a large amount of sheet scrap iron (thin pieces of shredder scrap) in a cupola or other shaft furnace, it is possible to suppress the formation of base material scaffolding on the furnace walls without dropping the production speed, prevent hanging of the charged raw material, a rise of the pressure loss inside the furnace, deterioration of permeability, etc., and carry out operation efficiently and stably over a long period.

### BRIEF DESCRIPTION OF THE DRAWINGS

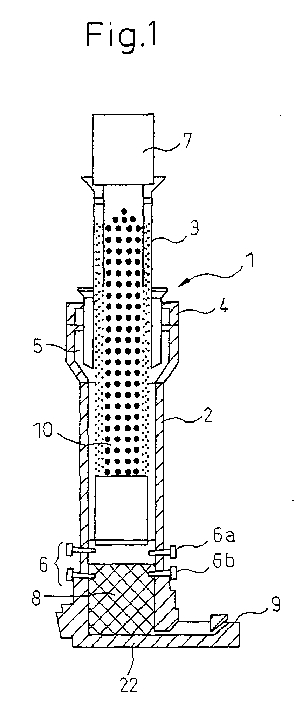

FIG. 1 is a view showing an embodiment of a shaft furnace according to the present invention.

### BEST MODE FOR CARRYING OUT THE INVENTION

An embodiment of the present invention will be explained based on the drawing.

FIG. 1 shows an embodiment of a shaft furnace.

A shaft furnace 1 basically comprises tuyeres 6 provided at the lower portion of a furnace body 2, a gas suction part 4 provided at the upper portion of the furnace body 2, and a furnace top 3 provided running through the inside of the gas suction part 4.

The tuyeres 6 are basically arranged in the height direction of the furnace in two rows of upper tuyeres 6a and lower tuyeres 6b. The upper tuyeres 6a are provided at a height position directly above the surface of the coke bed 8 filled in the furnace lower portion, while the lower tuyeres 6b are provided at a height position inside the coke bed 8. The tuyere diameter is set so that a raceway is not formed at the tuyere tip.

When blowing air in from the two rows of tuyeres of the upper tuyeres 6a and lower tuyeres 6b, the lower tuyeres 6b blow in air of room temperature or no more than 600°C to mainly burn the coke, while the upper tuyeres 6a blow in air of room temperature to burn the CO gas generated from a solution loss reaction between some of the combustion gas (CO₂) and the coke and compensating for the drop in the amount of melting heat due to the solution loss reaction (endothermic).

Note that when blowing in air from one row of tuyeres, the tuyeres are provided at the same height position as the lower tuyeres 6b. To promote combustion of the coke and raise the melting heat, it is necessary to enrich the oxygen in the room temperature or no more than 600°C air that is blown in from the lower tuyeres 6b so as to raise the oxygen concentration.

On the other hand, when blowing air from the two rows of tuyeres shown in FIG. 1, it is possible to compensate for the melting heat by the air blown from the upper tuyeres 6a, so it is not necessarily required to enrich oxygen in the room temperature or no more than 600°C air blown from the lower tuyeres 6b, accelerate the coke combustion, and increase the melting heat.

The raw material and fuel 10 are fed out from the respective material hoppers, weighed by scales, then placed in the charging device, that is, a bucket 7. The mix is then charged via the bucket 7 from the furnace top 3 of the shaft furnace 1 over the coke bed 8 formed at the lower portion of the shaft furnace 1.

The deposit height (stock level) of the raw material and fuel 10 is adjusted to a height position at the upper portion of the inside of the furnace top 3. By filling raw material and fuel 10 within a range in the height direction above the gas suction part 4 of the inside of the furnace top 3, the highest part of the furnace top (opening) is sealed.

Note that, naturally, during operation, the deposit height (stock level) of the raw material and fuel 10 descends as the raw material and fuel 10 descend due to melting of the raw material and fuel 10. Therefore, in order to stably melt the raw material and fuel while sealing the furnace top 3, a level meter (not shown)'or the like is attached to the inside of the furnace top 3 and used to measure the deposit height (stock level) of the raw material fuel 10 and control the charging timing of the raw material and fuel 10.

The raw material and fuel 10 is comprised of the iron source and solid fuel. These are charged from above the furnace top 3 of the shaft furnace 1 via a bucket 7 in alternating layers. Due to the combustion gas (CO₂) generated from the air blown from the tuyeres 6, the iron source is melted. Part is reduced by the reducing gas (CO). The generated pig iron descends through the coke bed 8, pools at the bottom of the furnace, and is tapped from a tap hole 9.

Note that the reduction and melting region where the iron source is reduced and melted mainly is formed in a range in the furnace height direction from the surface of the coke bed 8 upward by approximately 1 to 2.5 meters (corresponding to approximately 1 to 2.5 charges of raw material and fuel contained in the bucket 7).

As the solid fuel, it is preferable to use blast furnace coke (small-size coke) of about 40 to 50 mm size which is produced in the ironmaking process and can be inexpensive and stably acquired.

The iron source mainly comprises scrap iron, pig iron, foundry scrap, hot briquette iron (HBI), direct reduced iron (DRI), and other iron sources having high metallization rates and requiring only melting (not requiring reduction) and dust agglomerates, self-reducing nodules (agglomerates with a high carbon material content), and other iron sources having low metallization rates and requiring reduction.

The present invention is predicated on a method of operating a shaft furnace using, among iron sources requiring only melting (not requiring reduction), iron sources mixed with an especially large amount of sheet scrap iron (thin pieces of shredder scrap).

According to studies of the inventors, sheet scrap iron has a lighter weight, lower heat capacity, and higher melting point in comparison to plate scrap iron and large bulk size pig iron and other large scrap having similarly high metallization rates, so when melting iron sources having a high mixture rate of sheet scrap iron with a cupola or other shaft furnace, sometimes the sheet scrap iron backs up at a high position in the furnace height direction, rapidly starts to melt, and cools and solidifies. In such a case, base metal scaffolding is liable to form and grow on the furnace walls.

The base metal scaffolding once formed on the furnace walls at a high position, due also to the high melting point composition, is difficult to remelt, interferes with the descent speed of other charging raw materials descending from above, and becomes a cause of hanging. This is liable to lead to a rise in the furnace top gas temperature and other operation instability.

### (Maximum Thickness and Maximum Length of Sheet Scrap Iron)

According to the studies of the inventors, when sheet scrap iron with a maximum thickness of no more than 10 mm and a maximum length of no more than 150 mm is included in the iron source in a large amount, sometimes this sheet scrap iron backs up at a high position in the furnace height direction in the reduction and melting region, rapidly begins to melt, and cools and solidifies, therefore base metal scaffolding is liable to form on the furnace walls and grow.

This is believed to be because sheet scrap iron with a maximum thickness of no more than 10 mm and a maximum length of no more than 150 mm has a particularly light weight and low heat capacity, so sheet scrap iron is liable to back up and rapidly melt at a high position in the furnace height direction in the reduction and melting region.

### (C Content of Sheet Scrap Iron)

According to studies of the inventors, when sheet scrap iron with a C content of no more than 0.5 mass% is included in the iron source in a large amount, this sheet scrap iron melts and solidifies at a high position in the furnace height direction in the reduction and melting region, base metal scaffolding forms on the furnace wall, then hanging of the raw material and fuel is liable to occur.

This is believed to be because sheet scrap iron having a C content of no more than 0.5 mass% has a high melting point and therefore the base metal scaffolding once formed at a high position in the furnace height direction in the reduction and melting region of the shaft furnace is difficult to remelt and, further, the sheet scrap iron descending from above contacts the base metal scaffolding and becomes a nuclei for growth of base metal scaffolding.

### (Ratio of Sheet Scrap Iron to Total Iron Source)

According to studies of the inventors, when melting an iron source containing sheet scrap iron in no less than 50% by ratio to the total iron source by the above method of operating a shaft furnace, sheet scrap iron backs up, rapidly melts, and solidifies at a high position in the reduction and melting region where the iron source is reduced and melted (range in the furnace height direction from the surface of the coke bed 20 upward by approximately 1 to 2.5 meters (corresponding to 1 to 2.5 charges of raw material and fuel contained in the bucket 9)), base metal scaffolding forms on the furnace walls, other sheet scrap iron backs up on the base metal scaffolding surface, and base metal scaffolding is liable to rapidly grow due to solid phase diffusion, etc.

Because of this reason, in the present invention, the ratio of sheet scrap iron to the total iron source is made no less than 50 mass%.

Note that even when using an iron source with a ratio of sheet scrap iron to the total iron source of 100 mass% and melting the iron source by the above method of operating a shaft furnace, by dividing the sheet scrap iron into two and charging it into the shaft furnace in layers with a coke layer inserted between the sheet scrap iron layers, the effect of suppressing stagnation of sheet scrap iron and suppressing formation and growth of base metal scaffolding on the furnace wall is obtained.

However, when melting an iron source with a content of sheet scrap iron greater than 90 mass% by the above method of operating a shaft furnace, when charging the sheet scrap iron into the shaft furnace divided, the amount of raw material with a specific gravity larger than coke other than sheet scrap iron such as plate scrap iron or iron source other than scrap iron is lowered, so there is a decrease in the effect of suppression of stagnation of sheet scrap iron by the descent of the layers of these heavy specific gravity raw materials deposited on top of the deposited layers of the divided sheet scrap iron.

Therefore, to reliably obtain the effect of suppressing stagnation of sheet scrap iron and suppressing formation and growth of base metal scaffolding, the mixture ratio of sheet scrap iron in the iron source is preferably no more than 90 mass%.

### (Divided Charging of Sheet Scrap Iron)

The present invention comprises melting an iron source containing a large amount of sheet scrap iron in the above shaft furnace during which it divides the sheet scrap iron of each charge in a raw material charging bucket into two so that the ratio of divided sheet scrap iron to the total iron source is no more than 50 mass% in each portion, inserts at least raw material of any of plate scrap iron, an iron source other than scrap iron, or coke between the divided portions of the sheet scrap iron, then charges the furnace interior, via the raw material charging bucket, with the divided sheet scrap iron and any of the plate scrap iron, iron source other than scrap iron, or coke in alternating layers.

By dividing the sheet scrap iron in the iron source into two and charging it via the bucket 7 into the shaft furnace 1 in this way, when melting an iron source containing sheet scrap iron in a large amount by operation of the above shaft furnace, the deposited layer of the sheet scrap iron inside the furnace, particularly in the reduction and melting region (range in the furnace height direction from the surface of the coke bed 20 upward by approximately 1 to 2.5 meters (corresponding to 1 to 2.5 charges of raw material and fuel contained in the bucket 7)) becomes thinner and stagnation of sheet scrap iron is suppressed by the descent of any of the plate scrap iron, iron source other than scrap iron, or coke positioned above the deposited layer of this sheet scrap iron.

Due to this, stagnation, rapid melting, and solidification of the sheet scrap iron at a high position in the furnace height direction of the reduction and melting region and resultant formation of base metal scaffolding on the furnace wall are suppressed. Further, it is possible to suppress the rapid growth of the base metal scaffolding due to stagnation, solid phase diffusion, etc. of other sheet scrap iron on the surface of the base metal scaffolding formed from this sheet scrap iron.

This effect of suppressing stagnation of sheet scrap iron and formation and growth of base metal scaffolding is obtained by dividing the sheet scrap iron of each charge in the raw material charging bucket into two and inserting between the divided portions of the sheet scrap iron at least one material among plate scrap iron, an iron source other than scrap iron, and coke, but there is a greater effect when inserting plate scrap iron and/or an iron source other than scrap iron with a larger specific gravity than coke between the divided portions of the sheet scrap iron and charging it via a raw material charging bucket into the shaft furnace in layers.

Further, generally, scrap iron or an iron source with a high metallization rate other than scrap iron is picked up by a lifting magnet type crane by an electromagnet, weighed by a scale, then placed in the raw material charging bucket. Coke and other solid fuel is fed out from a hopper, weighed by a scale, then placed in the raw material charging bucket, so the methods of placement of the two differ.

Therefore, when dividing the sheet scrap iron of each charge in the raw material charging bucket into two and inserting plate scrap iron and/or an iron source other than scrap iron between the divided portions of the sheet scrap iron, there is no drop in working efficiency when placing the raw materials and fuel in the raw material charging bucket in comparison to when charging coke, so this is preferable.

Note that, the effect of suppressing stagnation of the sheet scrap iron and formation and growth of base metal scaffolding is obtained even if dividing the sheet scrap iron of each charge in the raw material charging bucket into three or more for charging into the shaft furnace, however, this increases the work time required for placement of the raw material and fuel per charge in the raw material charging bucket and becomes a cause in decreasing the productivity of pig iron by a shaft furnace. Therefore, in the present invention, the sheet scrap iron is divided into two.

### (Ratio of Sheet Scrap Iron After Division to Total Iron Source)

Further, in order to sufficiently obtain the effect of suppressing stagnation of sheet scrap iron and formation and growth of base metal scaffolding, when dividing the sheet scrap iron raw material, it is necessary to make the ratio of divided sheet scrap iron to total iron source of each charge in the charging bucket no more than 50 mass% in each portion.

If the ratio of divided sheet scrap iron to total iron source of either portion exceeds 50 mass% for a charge in the charging bucket, the thickness of the deposit layer which the sheet scrap iron forms in the furnace increases and the above effect of suppressing stagnation of the sheet scrap iron and formation and growth of the base metal scaffolding can no longer be sufficiently obtained.

For this reason, when dividing the sheet scrap iron, each charge in the charging bucket is divided so that the ratio of the divided sheet scrap iron to total iron source becomes no more than 50 mass% in each portion.

As explained above, according to the present invention, there is provided a method of operating a shaft furnace which melts an iron source containing sheet scrap iron in 50 mass% to 90 mass% by a cupola or other shaft furnace during which it is possible to suppress the formation of base metal scaffolding on the furnace wall without limiting the amount of sheet scrap iron contained per charge in the raw material charging bucket and without a drop in the production speed and as a result possible to prevent hanging of the charged raw material, a rise in the pressure loss in the furnace, worsening of permeability, etc. possible to perform efficient and stable operation over a long period of time.

### EXAMPLES

Next, examples of the present invention will be explained, however the conditions of the examples are illustrations of conditions employed to confirm the workability and effects of the present invention. The present invention is not limited to these illustrations of conditions. The present invention can employ various conditions so long as the object of the present invention is achieved without departing from the gist of the present invention.

### (Examples)

The shaft furnace shown in FIG. 1 is charged with each combination of raw materials and fuel shown in Table 1 and operated continuously under each of the charging conditions shown in Table 2 for seven days. In each case, the maximum value of the furnace top gas temperature (°C), the minimum value of the blast pressure (kPa), and the number of shutdowns (n) were measured. Note that, when the maximum value of the furnace top gas temperature becomes 600°C or greater during operation, a shutdown, that is, temporary production halt, was staged.

As the solid fuel, blast furnace coke with an average particle size of 40 mm was used. As the sheet scrap iron, scrap iron with a maximum thickness of 5 mm, maximum length of 200 mm, and average C content of 0.3 mass% was used.

When using a raw material A including dust pellets, in order to adjust the slag basicity and improve the slag-off performance, 3 mass% of limestone (CaO) is mixed as a secondary raw material in the raw material and fuel. The limestone (CaO) is charged into the shaft furnace via the charging bucket together with the coke.

Further, when using the all scrap raw materials B, C, and D, in order to adjust slag basicity and improve the slag-off performance, 4 mass% limestone (CaO) is mixed as a secondary raw material in the raw material and fuel. The limestone (CaO) is charged into the shaft furnace via the charging bucket together with the coke.

**Table 1**

| Raw material and fuel | Mixture ratio (mass%) in iron source | | | Coke charge per ton of iron source (kg) |
|---|---|---|---|---|
| | Dust pellets | Sheet scrap iron | Plate scrap iron | |
| A | 10 | 60 | 30 | 240 |
| B | 0 | 80 | 20 | 200 |
| C | 0 | 90 | 10 | 200 |
| D | 0 | 95 | 5 | 200 |

**Table 2**

| | Raw material and fuel | Divided sheet scrap iron layer | | Other raw material layer | | Blast pressure (kPa) | Furnace top gas temp. (°C) | Shutdowns (number) | Production rate (T/H) |
|---|---|---|---|---|---|---|---|---|---|
| | | Ratio to total iron source (mass%) | | Inserted layer between divided sheet layers | Deposited layer above divided sheet layer | | | | |
| Inv. Ex. 1 | A | 20 | 40 | Dust pellets + plate scrap iron | Coke | 17 | 250 | 0 | 46 |
| Inv. Ex. 2 | A | 20 | 50 | Coke | Dust pellets + plate scrap iron | 15 | 300 | 0 | 45 |
| Inv. Ex. 3 | B | 40 | 40 | Plate scrap iron | Coke | 14 | 270 | 0 | 57 |
| Inv. Ex. 4 | C | 40 | 50 | Plate scrap iron | Coke | 15 | 280 | 0 | 56 |
| Inv. Ex. 5 | D | 45 | 50 | Plate scrap iron | Coke | 16 | 300 | 0 | 54 |
| Comp. Ex. 6 | A | 5 | 55 | Coke | Dust pellets + plate scrap iron | 7 | 750 | 3 | 39 |
| Comp. Ex. 7 | B | 30 | 60 | Plate scrap iron | Coke | 6 | 850 | 3 | 49 |

As shown in Table 2, in Invention Examples 1 to 5, the ratios (mass%) of divided sheet scrap iron to total iron source and charging conditions of other raw materials and fuel (plate scrap iron, iron source other than scrap iron, or coke) inserted between the divided sheet layers satisfy the scope of the present invention, so it was possible to maintain a specified blast pressure (no less than 12 kPa) during operation and maintain a furnace top gas temperature at no more than a specified temperature (no more than 350°C) and, accordingly, reduce the number of shutdowns (no more than 1) and stably maintain a high production rate (no less than 55T/H with all scrap raw material (B) and no less than 45T/H with dust pellet mixed raw material (A)). Invention Example 5 is an example of when the sheet scrap iron is 95%. Due to the effect of the present invention, stable operation was made possible without shutdowns caused from hanging and other instabilities. However, in comparison to Invention Examples 1 to 4 where the sheet scrap iron was no more than 90%, there was a tendency for the blast pressure to increase and the furnace top temperature to rise. The production rate also decreased slightly.

On the other hand, in Comparative Examples 6 and 7, the ratios (mass%) of divided sheet scrap iron to total iron source greatly deviated from the scope of the present invention, so sometimes the blast pressures during operation were a low 6 to 7 kPa and the furnace top gas temperature increased to 700°C or higher. The number of shutdowns increased to three and, accordingly, the production rate also decreased (no more than 50T/H with all scrap raw material (B) and no more than 40T/H with dust pellet mixed raw material (A)).

In this way, by applying the present invention, it is possible to suppress hanging of the raw material and fuel caused by the rapid melting and solidification of sheet scrap iron at a high position in the furnace height direction of the reduction and melting region due to stagnation of the sheet scrap iron and formation and growth of base metal scaffolding on the furnace wall, maintain good specified blast pressure during operation and furnace top gas temperature, and carry out operation with a high production rate stably over a long period of time. Note that the sheet scrap iron can be flat, rounded into shredder scrap shapes, or made any other shape.

### INDUSTRIAL APPLICABILITY

As mentioned above, according to the present invention, when melting an iron source mixed with a large amount of sheet scrap iron (thin pieces of shredder scrap) by a cupola or other shaft furnace, it is possible to suppress formation of base metal scaffolding on the furnace walls without a drop of the production speed, prevent hanging of the charged raw material, a rise of pressure loss in the furnace, worsening of permeability etc. and carry out efficient and stable operation over a long period of time. Therefore, the present invention has high applicability in the pig iron production industry.

## Claims

1. A method of operating a shaft furnace charging an iron source containing sheet scrap iron in no less than 50 mass% and coke in alternating layers over a coke bed filled inside a furnace lower portion from the furnace top and blowing air from tuyeres at the lower portion of the furnace to melt the iron source, said method of operating a shaft furnace comprising
(a) dividing the sheet scrap iron of each charge in a raw material charging bucket into two so that the ratio of the sheet scrap iron after division to the total amount of the iron source becomes no more than 50 mass% in each portion,
(b) inserting between the divided portions of sheet scrap iron at least one material of plate scrap iron, an iron source other than scrap iron, or coke, then
(c) charging the furnace interior via the raw material charging bucket with the divided sheet scrap iron and any of the plate scrap iron, iron source other than scrap iron, or coke in alternating layers.

2. A method of operating a shaft furnace as set forth in claim 1, wherein the sheet scrap iron has a maximum thickness of no more than 10 mm and a maximum length of no more than 150 mm.

3. A method of operating a shaft furnace as set forth in claim 1 or 2, wherein the sheet scrap iron has a C content of no more than 0.5 mass%.
